# EUROPEAN PATENT SPECIFICATION

(11) **EP 2 175 967 B1**
(45) Date of publication and mention of the grant of the patent: **08.04.2015**
(21) Application number: 08756994.3
(22) Date of filing: 23.06.2008
(51) Int. Cl.: B01D 53/62, B01D 53/14, B01D 53/86

(54) **AN IMPROVED METHOD FOR CO2 TRANSFER FROM GAS STREAMS TO AMMONIA SOLUTIONS**
VERBESSERTES VERFAHREN ZUM TRANSFER VON CO2 VON GASSTRÖMEN ZU AMMONIAKLÖSUNGEN
PROCEDE AMELIORE DE TRANSFERT DE CO2 DE FLUX GAZEUX VERS DES SOLUTIONS AMMONIACALES

(30) Priority: 22.06.2007 AU 2007903368 P
(43) Date of publication of application: 21.04.2010
(73) Proprietor: Commonwealth Scientific and Industrial Research Organisation, Campbell, Australian Capital Territory 2612 (AU)
(72) Inventor: WIBBERLEY, Louis, Garden Suburb, NSW 2289 (AU)
(74) Representative: Bishton, Amy Virginia
(86) International application number: PCT/AU2008/000914
(87) International publication number: WO 2009/000025

(56) References cited:
- WO-A1-00/57990
- WO-A1-2006/022885
- US-A- 4 847 057
- DATABASE WPI Week 200412, Derwent Publications Ltd., London, GB; Class E36, AN 2004-112935, XP003026509 & JP 2003 334421 A (MACHIDA K) 25 November 2003
- DATABASE WPI Week 200532, Derwent Publications Ltd., London, GB; Class E36, AN 2005-310233, XP003004357 & JP 2005 097072 A (ZH CHIKYU KANKYO SANGYO GIJITSU KENKYU) 14 April 2005
- DATABASE WPI Week 199116, Derwent Publications Ltd., London, GB; Class Q73, AN 1991-113903, XP003026510 & JP 03 055417 A (SATO I) 11 March 1991
- DATABASE WPI Week 199116, Derwent Publications Ltd., London, GB; Class E36, AN 1991-115692, XP003026511 & SU 1 567 251 A1 (TSEITLIN M A) 30 May 1990
- DATABASE WPI Week 199648, Derwent Publications Ltd., London, GB; Class E36, AN 1996-479617, XP003026511 & IL 103 153 A (HAMIT ENERGY AS) 16 October 1996

## Description

### Field of the invention

This invention relates generally to the use of ammonia based solutions to absorb carbon dioxide from flue gases for the purpose of capturing carbon dioxide.

The invention has particular, though not of course exclusive, application to the post combustion capture of CO₂ from the flue gases of power stations or from process gases in a wide variety of industrial processes including steel plants, cement kilns, calciners and smelters.

### Background of the invention

There is rapidly growing pressure for stationary sources of CO₂ emissions such as power stations, to make step reductions in greenhouse gas emissions (GHG) through 1) capturing the CO₂ formed from the process, and 2) storing the CO₂ by various geological means. This involves injection of CO₂ in a supercritical or "liquefied" state into deep aquifers, coal seams, or deep ocean trenches in the ocean floor, or storage of CO₂ as solid compounds.

The process for capturing the CO₂ from power station or combustion device flue gases is termed post combustion capture. In post combustion capture, the CO₂ in flue gas is preferentially separated from nitrogen and residual oxygen using a suitable solvent in an absorber. The CO₂ is then removed from the solvent in a process called stripping (or regeneration), thus allowing the solvent to be reused. The stripped CO₂ is then liquefied by compression and cooling, with appropriate drying steps to prevent hydrate formation.

Post combustion capture in this form is applicable to a variety of stationary CO₂ sources as well as power stations, such as steel plants, cement kilns, calciners and smelters.

The main disadvantage of this process is that the CO₂ partial pressure is relatively low, which necessitates the use of CO₂-selective solvents, the addition of promoters, cooling for the absorption process, and a large gas-liquid contact area to enable sufficient solvent loading.

The use of solutions of ammonia for removing CO₂ from flue gas streams is attractive from a chemistry perspective, with a number of important advantages relative to systems that employ monoethanolamine (MEA) or other amines as the solvent, longknown for recovering CO₂ from gas mixtures:
- SOx and NOx can be absorbed, with the possibility of advantageously selling the spent solvent solution as a fertiliser (SOx and NOx degrade amine solvents).
- Ammonia is a low cost chemical, in widespread commercial use.
- Oxygen in the flue gas does not degrade the solvent (but it does degrade amines).

The overall energy required for such a process is projected to be around 40% of that required for MEA systems.

For the ammonia process, the solvent solution consists of ammonium, carbonate and bicarbonate ions, in equilibrium with dissolved ammonia (aqueous), and dissolved CO₂ (aqueous). In the absorber, water and ammonia react with CO₂ (aqueous) to form bicarbonate ions or ammonium carbamate ions, with the reaction reversed in the stripper by the application of energy. The relevant aqueous phase reactions can be summarized by the following overall equations:

CO₂ + H₂O + NH₃ ↔ HCO₃⁻ + NH₄⁺ (eqn. 1)

CO₂ + 2NH₃ ↔ NH₂COO⁻ + NH₄⁺ (eqn. 2)

HCO₃⁻ + NH₃ ↔ CO₃²⁻ + NH₄⁺ (eqn. 3)

CO₃²⁻ + H₂O + CO₂ ↔ 2HCO₃⁻ (eqn. 4)

The amount of free ammonia in the gas phase exiting the absorber is proportional to the amount of ammonia (aqueous), which is controlled by the concentration of the other species in the solution, and the temperature: higher temperatures increase the amount of ammonia in the gas phase.

The major concern with the ammonia process has been ammonia loss (or "slip") associated with both the absorber and the stripper.

International patent publication WO 2006/022885 proposes to address the problem of ammonia slip by cooling the flue gas to 0 - 20°C and operating the absorption stage in this temperature range, preferably in the range 0 - 10°C. Regeneration is by elevating the pressure and temperature of the CO₂-rich solution from the absorber. The CO₂ vapour pressure is high, and a pressurized CO₂ stream, with low concentration of NH₃ and water vapour, is generated. The high pressure CO₂ stream is cooled and washed to recover the ammonia and moisture from the gas. This process, known as a chilled ammonia process, is reported to reduce the degree of ammonia slip, but requires considerable energy for chilling, particularly when it is considered that the reaction heat (the carbonate to bicarbonate reaction involved is exothermic) must be removed to maintain the low temperature. This cooling requirement renders the chilled ammonia process impractical on a larger scale in warmer or even temperate climates. Low temperatures also reduce the kinetics of the absorption reaction.

It is an object of the invention to address the issue of ammonia slip in ammonia-based systems for removing CO₂ from flue gases, while maintaining a satisfactory temperature for CO₂ absorption.

### Summary of Invention

In the present invention, a higher absorption temperature is proposed (e.g. around 20-30°C), to increase the reaction kinetics through the effect of temperature on the activation energy for the reaction. For this benefit to be achieved, it is necessary to incorporate at least one of the following additional measures:
1. absorption of CO₂ from the flue gas under pressure; and/or
2. cooling of the gas exiting the absorber, e.g. by chilled water washing.

Absorption under pressure, in addition to reducing the partial pressure of ammonia in the gas phase (ie ammonia "slip") also increases the amount of CO₂ (aqueous) in solution, according to Henry's Law. This has a beneficial impact on the rate of formation of bicarbonate.

Chilled water washing can be employed at any desired temperature down to the freezing point. This approach is advantageous compared to chilling the overall solution in the absorber, as in WO 2006/022885, since there is less chilling required due to the smaller amount of gas, and since the need to remove the reaction heat, at the lower absorber temperature, is avoided.

The invention accordingly provides, in a first aspect, a method of recovering carbon dioxide from a stream of flue gases, comprising:
contacting the stream at a gas pressure above atmospheric pressure with an aqueous solvent system, containing ammonium, carbonate and bicarbonate ions, at a temperature above 10°C to effect absorption of CO₂ from the stream,
separating the solvent containing the absorbed CO₂ as carbonate, bicarbonate and CO_{2(aq)} from the stream of CO₂-leaner flue gases to form a CO₂ and/or bicarbonate-rich solvent stream; and
expanding the CO₂-leaner flue gases to a lower pressure thereby cooling the gases;
characterized by recycling to the aqueous solvent system ammonia condensed from said flue gas as a result of said expansion.

The stream of flue gases is preferably at a gas pressure in the range 500-3000 kPa, (1 to 30 bar), most preferably in the range 500-1500 kPa (5 to 15 bar), when contacted with the solvent system. To achieve this, the stream of flue gases is preferably compressed to the desired pressure before said contact.

Typically, the method includes the further steps of desorbing CO₂ from the CO₂-rich solvent stream by application of heat to the solvent stream to desorb the CO₂. The now CO₂-lean solvent stream may be conveniently recycled to said solvent system. Typically, CO₂ desorbed from the CO₂-rich solvent stream is compressed, cooled and liquefied for storage.

The invention further provides apparatus for recovering carbon dioxide from a stream of flue gases, comprising:
an absorber stage for contacting the stream with an aqueous solvent system at a temperature above 10°C and containing dissolved ammonia to effect absorption of CO₂ from said stream, and for separating the solvent containing the absorbed CO₂ from the stream of CO₂-leaner flue gases to form a CO₂ and/or bicarbonate-rich solvent stream; and
a gas expander (45) mounted to receive said CO₂-leaner gases and to expand the gases to a lower pressure;
characterized in that said gas expander is configured and connected to recycle to the aqueous solvent system ammonia condensed from said flue gas as a result of said expansion.

The temperature of the aqueous solvent system is preferably greater than 15°C, more preferably greater than 20°C, and most preferably in the range 20-50°C. A temperature in the range 25° to 45° is suitable.

If required, the stream of flue gases is cooled before being contacted with the solvent system, for example to about 40°C.

Advantageously, the steps of contacting the stream of flue gases with the aqueous solvent system and cooling the CO₂-leaner flue gases are carried out in a common vessel, e.g. a tower vessel, in which the gas pressure is above atmospheric. This pressure is preferably in the range 100 to 3000 kPa (1 to 30 bar), most preferably in the range 500-1500 kPa (5 to 15 bar).

Advantageously, after said cooling step, the cooled CO₂-leaner flue gases at a pressure above atmospheric are further cooled by being expanded to a lower pressure, for example to substantially atmospheric pressure, resulting in further condensation of residual ammonia which is recycled to the aqueous solvent system.

Advantageously, said absorption of CO₂ is catalysed by the presence of selected enzymes to promote the rate of absorption of CO₂ to bicarbonate in solution. A suitable such enzyme is carbonic anhydrase.

An alternative to using enzymes to promote the rate of CO₂ conversion to bicarbonate in solution is the use of inorganic Lewis bases, such as arsenate (AsO₄^{3"}) or phosphate (PO₄^{3"}). The enzyme or Lewis base (promoters) can be circulated at low concentration in the liquid solvent or supported on solid structures over which the solvent solution and CO2 containing gases flow. In the latter case, the surface of the support material has been chemically modified, so that the enzymes or Lewis base attach securely, and is configured to maximise gas-liquid transfer of CO₂.

With the solid support option, the type and configuration of the enzyme or Lewis base, and its support, can be varied to accommodate variations in the composition of the CO₂ containing gas, the local loading of the solvent, and local temperature and pressure conditions.

### Description of Embodiments of the Invention

The invention will now be further described, by way of example only, with reference to the accompanying diagram of post-combustion capture plant in accordance with a preferred embodiment of both aspects of the invention.

CO₂-lean solvent solution is pumped and sprayed in at the top 13 of an absorber stage in the form of a packing column 14 in the lower part of a towel vessel 15. This solution flows around and downwardly through packing material 25 of the column 14, while the CO₂ containing stream of flue gases 11 is compressed by compression plant 8, thereafter cooled at 48 (to, for example, about 40°C), and then introduced at 16 to the bottom of the absorber. The compressed and cooled flue gases pass up through the packing material and thereby contact the solvent system comprising the solvent solution flowing down the packing material. CO₂ is transferred to the solvent solution, a process that is preferably enhanced by the interaction with appropriate added enzymes or a Lewis base.
Compressor plant 8 may comprise a gas turbine compressor which is suitable for compressing relatively high volumes of gas up to 30 bar. In this case, it is thought that a gas pressure of about 10 bar in column 14 will achieve satisfactory results.

The presence of a base such as ammonia/ammonium ions maintains a basic absorber solution pH to keep the dissolved CO₂ as HCO₃/CO₃²⁻ ions. Ammonia can also directly react with dissolved CO₂ to form carbamates. At sufficiently high concentrations, the bicarbonate/carbonate ions can also precipitate out of solution as the ammonium salts, resulting in a slurry, which allows more CO₂ to be transferred by the loaded solvent system.

At the top 17 of the absorber column 14, the CO₂-leaner gases leave the process, while the CO₂-rich solution 25 (containing, carbamate, carbonate and bicarbonate) is extracted from the bottom at 20 for further processing. Ammonia slip is ameliorated by subjecting the exit gas before it is passed to a flue stack 27, to a cold water wash from overhead sprays 50 in the upper part of the tower vessel 15. A further small column 26 of suitable packing material facilitates contact and therefore the cooling process. The cold water, e.g. at 0-10°C, dissolves ammonia from the CO₂-leaner flue gases, and is collected in a tray system 28 for recirculation by a pump 29 via a cooling device 31. A proportion of the recirculating ammonia-loaded wash water 23 is recycled via conduit 23a to the solvent system in the absorber stage at 19.

The cooled CO₂-leaner gases 21 exiting the tower vessel 15 at 21 a, are at the gas pressure within the vessel (suitably about 10 bar, as noted earlier). Preferably, these gases are expanded in a chamber 45, in a controlled manner whereby further cooling of the gases is achieved and further residual ammonia condenses from the gases and is recycled to the solvent solution.

The bicarbonate-rich solvent solution is delivered via line 25 to be heated in a stripper or absorbent regeneration stage, in this case a packing column 30, to release the CO₂ for storage or other chemical applications, with the recovered CO₂ lean solvent solution 34 being re-circulated via reboiler 33 and conduit 32 back to the top 13 of the absorber column 14: it is cooled en route as necessary by heat exchange at 36 with the CO₂-rich solvent stream in line 25, and by a second cooler 37. The process also allows utilization of carbonate and bicarbonate salts such as ammonium carbonate/bicarbonate if desired. The recovered CO₂ stream 38 is typically treated at 40 by being compressed, cooled and liquefied for storage.

The stripper/regeneration stage is preferably also operated at a gas pressure above atmospheric, for example a pressure similar to that maintained in the absorber stage, around 10 bar.
It will of course be appreciated that columns 14, 30 may each comprise more than one absorber or stripper. Moreover, within an individual column 14, 26 or 30, there may well be multiple stages.

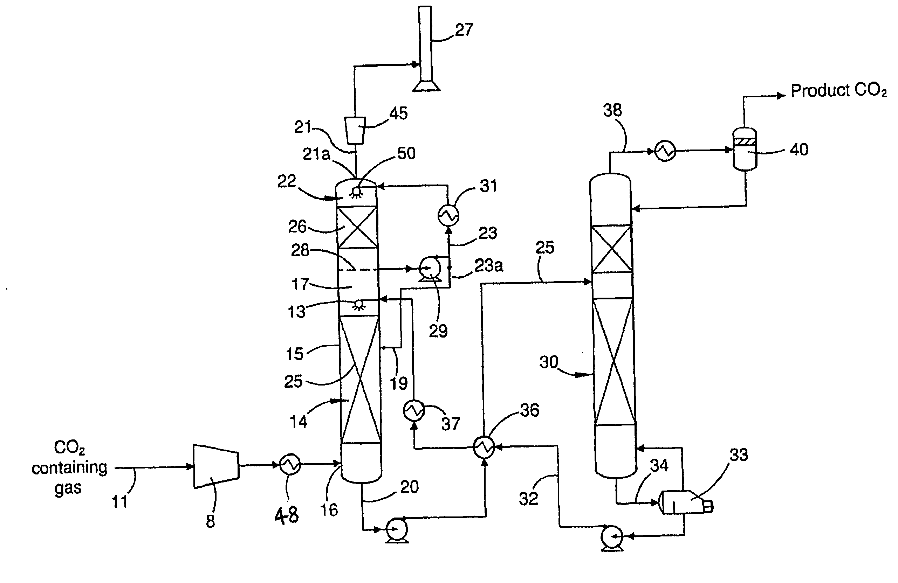

## Claims

1. A method of recovering carbon dioxide from a stream of flue gases, comprising:
contacting the stream at a gas pressure above atmospheric pressure with an aqueous solvent system, containing ammonium, carbonate and bicarbonate ions, at a temperature above 10°C to effect absorption of CO₂ from the stream,
separating the solvent containing the absorbed CO₂, as carbonate, bicarbonate and CO_{2(aq)} from the stream of CO₂-leaner flue gases to form a CO₂ and/or bicarbonate-rich solvent stream; and
expanding the CO₂-leaner flue gases to a lower pressure thereby cooling the gases;
**characterized by** recycling to the aqueous solvent system ammonia condensed from said flue gas as a result of said expansion.

2. A method according to claim 1 wherein said lower pressure is substantially atmospheric pressure.

3. A method according to claim 1 or 2 wherein said gas pressure is in the range 500-3000 kPa, when contacted with the solvent system.

4. A method according to claim 1, 2 or 3 wherein said gas pressure is in the range 500-1500 kPa, when contacted with the solvent system.

5. A method according to any one of claims 1 to 4 further including compressing said stream of flue gases prior to said contacting step, to said gas pressure above atmospheric pressure.

6. A method according to any one of claims 1 to 4 further including cooling said CO₂-leaner flue gases by contact with water that dissolves ammonia therefrom, and recycling said dissolved ammonia back to said solvent system.

7. A method according to claim 6 wherein the steps of contacting the stream of flue gases with the aqueous solvent system and cooling the CO₂-leaner flue gases by contact with water are carried out in a common vessel.

8. A method according to any one of claims 1 to 7 wherein said step of contacting the stream of flue gases with the aqueous solvent system is effected at a temperature greater than 20°C.

9. A method according to any one of claims 1 to 7 wherein said step of contacting the stream of flue gases with the aqueous solvent system is effected at a temperature in the range 20-50°C.

10. A method according to any one of claims 1 to 9, further including desorbing CO₂ from the CO₂ and/or bicarbonate-rich solvent stream by application of heat to the solvent stream to desorb the CO₂, and thereby form a CO₂-lean solvent stream, and recycling the CO₂-lean solvent stream to said solvent system.

11. A method according to claim 10 wherein said CO₂ desorbed from the CO₂ and/or bicarbonate-rich solvent stream is compressed, cooled and liquefied for storage.

12. A method according to any one of claims 1 to 11, including cooling the stream of flue gases before it is contacted with the solvent stream.

13. Apparatus for recovering carbon dioxide from a stream of flue gases, comprising:
an absorber stage (14) for contacting the stream with an aqueous solvent system at a temperature above 10°C, said aqueous solvent solution containing dissolved ammonia to effect absorption of CO₂ from said stream, the absorber stage for separating the solvent containing the absorbed CO₂ from the stream of CO₂-leaner flue gases to form a CO₂ and/or bicarbonate-rich solvent stream; and
a gas expander (45) mounted to receive said CO₂-leaner gases and expand the gases to a lower pressure;
**characterized in that** said gas expander is configured and connected to recycle to the aqueous solvent system ammonia condensed from said flue gas as a result of said expansion.

14. Apparatus according to claim 13 further including a compressor (8) arranged to compress said stream of flue gases to a pressure greater than atmospheric pressure, wherein said compressor is connected (16) to said absorber stage to deliver the pressurized gases thereto for said contacting with the aqueous solvent system, whereby in operation said contacting is effected at a pressure above atmospheric pressure.

15. Apparatus according to claim 13 or 14, further including a stripper stage (30) connected to receive (25) the CO₂ and/or bicarbonate-rich solvent stream from the absorber stage and to apply heat to desorb CO₂ from the stream and thereby form a CO₂-lean solvent stream, wherein the stripper stage (30) is connected (32) to recycle the CO₂-lean solvent stream to said solvent system.

16. Apparatus according to any one of claims 11 to 15, further including a device (48) arranged to cool the stream of flue gases before it is contacted with the solvent system.

17. Apparatus according to any one of claims 11 to 16 further comprising an arrangement (50) for cooling said CO₂-leaner flue gases by contact with water that dissolves ammonia therefrom, and wherein said arrangement is for recycling (23a) the dissolved ammonia back to said solvent system.

18. Apparatus according to claim 17 wherein said absorber stage and said arrangement for cooling are provided by a common vessel (15).

## Patentansprüche

1. Verfahren zur Kohlendioxidrückgewinnung aus einem Abgasstrom, welches folgendes umfasst:
Kontaktieren des Gasstroms bei einem Gasdruck über Atmosphärendruck mit einem wässrigen Lösungsmittelsystem, welches Ammonium, Carbonat und Bicarbonationen enthält, bei einer Temperatur von über 10°C zur Bewirkung der CO₂-Absorption aus dem Strom;
Separieren des das absorbierte CO₂ enthaltenden Lösungsmittels, als Carbonat, Bicarbonat und CO_{2(aq)}, aus dem Strom der CO₂-ärmeren Abgase zur Bildung eines CO₂- und/oder bicarbonatreichen Lösungsmittelstroms; und
Expandieren der CO₂-ärmeren Abgase auf einen niedrigeren Druck zur Abkühlung der Gase,
gekennzeichnet durch
die Rückführung von aufgrund der Gasexpansion aus dem Abgas kondensiertem Ammoniak in das wässrige Lösungsmittelsystem.

2. Verfahren nach Anspruch 1, bei dem der niedrigere Druck im Wesentlichen Atmosphärendruck ist.

3. Verfahren nach Anspruch 1 oder 2, bei dem der Gasdruck bei Kontaktierung mit dem Lösungsmittelsystem im Bereich von 500 kPa bis 3000 kPa liegt.

4. Verfahren nach Anspruch 1, 2 oder 3, bei dem der Gasdruck bei Kontaktierung mit dem Lösungsmittelsystem im Bereich von 500 kPa bis 1500 kPa liegt.

5. Verfahren nach einem der Ansprüche 1 bis 4, weiterhin gekennzeichnet durch das Komprimieren des Abgasstroms vor dem Kontaktierungsschritt auf den Gasdruck über Atmosphärendruck.

6. Verfahren nach einem der Ansprüche 1 bis 4, weiterhin gekennzeichnet durch das Abkühlen der CO₂-ärmeren Abgase durch Kontakt mit Wasser, wodurch das Ammoniak herausgelöst wird, und Rückführen des gelösten Ammoniaks in das Lösungsmittelsystem.

7. Verfahren nach Anspruch 6, bei dem die Schritte des Kontaktierens des Abgasstroms mit dem wässrigen Lösungsmittelsystem und des Abkühlens der CO₂-ärmeren Abgase durch Kontakt mit Wasser in einem gemeinsamen Behälter durchgeführt werden.

8. Verfahren nach einem der Ansprüche 1 bis 7, bei dem der Schritt des Kontaktierens des Abgasstroms mit dem wässrigen Lösungsmittelsystem bei einer Temperatur von über 20°C erfolgt.

9. Verfahren nach einem der Ansprüche 1 bis 7, bei dem der Schritt des Kontaktierens des Abgasstroms mit dem wässrigen Lösungsmittelsystem bei einer Temperatur im Bereich von 20°C bis 50°C erfolgt.

10. Verfahren nach einem der Ansprüche 1 bis 9, weiterhin gekennzeichnet durch das Desorbieren von CO₂ aus dem CO₂- und/oder bicarbonatreichen Lösungsmittelstrom durch Wärmezufuhr an den Lösungsmittelstrom zur Desorption des CO₂ und somit Bildung eines CO₂-armen Lösungsmittelstroms, und Rückführen des CO₂-armen Lösungsmittelstroms in das Lösungsmittelsystem.

11. Verfahren nach Anspruch 10, bei dem das aus dem CO₂- und/oder bicarbonatreichen Lösungsmittelstrom desorbierte CO₂ zur Lagerung komprimiert, gekühlt und verflüssigt wird.

12. Verfahren nach einem der Ansprüche 1 bis 11, weiterhin gekennzeichnet durch den Schritt des Abkühlens des Abgasstroms vor dessen Kontaktierung mit dem Lösungsmittelstrom.

13. Vorrichtung zur Kohlendioxidrückgewinnung aus einem Abgasstrom, welche folgendes umfasst:
eine Absorberstufe (14) zum Kontaktieren des Stroms mit einem wässrigen Lösungsmittelsystems bei einer Temperatur von über 10°C, wobei die wässrige Lösungsmittellösung gelösten Ammoniak enthält, um die Absorption von CO₂ aus dem Strom zu bewirken, wobei die Absorberstufe zum Separieren des Lösungsmittels das absorbierte CO₂ aus den CO₂-ärmeren Abgasen enthält, um einen CO₂- und/oder bicarbonatreichen Lösungsmittelstrom zu bilden, und
einen Gasexpander (45), der derart angeordnet ist, dass er die CO₂-ärmeren Gase empfängt und die Gase auf einen niedrigeren Druck expandiert;
**dadurch gekennzeichnet, dass**
der Gasexpander derart konfiguriert und angeschlossen ist, dass er das aufgrund dieser Gasexpansion aus dem Abgas kondensierte Ammoniak an das wässrige Lösungsmittelsystem zurückführt.

14. Vorrichtung nach Anspruch 13, weiterhin gekennzeichnet durch einen Kompressor (8), der zur Komprimierung des Abgasstroms auf einen Druck über Atmosphärendruck angeordnet ist, wobei der Kompressor mit der Absorberstufe verbunden (16) ist, um die Druckgase zur Kontaktierung mit dem wässrigen Lösungsmittelsystem an diese Absorberstufe zu leiten, wobei im Betrieb die Kontaktierung bei einem Druck über Atmosphärendruck erfolgt.

15. Vorrichtung nach Anspruch 13 oder 14, weiterhin gekennzeichnet durch eine Stripper-Stufe (30), die derart angeschlossen ist, dass sie einerseits den CO₂- und/oder bicarbonatreichen Lösungsmittelstrom aus der Absorberstufe empfängt (25) und andererseits Wärme zur Desorption von CO₂ aus dem Strom und somit zur Bildung eines CO₂-armen Lösungsmittelstroms zuführt, wobei die Stripper-Stufe (30) derart angeschlossen (32) ist, dass der CO₂-arme Lösungsmittelstrom an das Lösungsmittelsystem zurückgeführt wird.

16. Vorrichtung nach einem der Ansprüche 11 bis 15, weiterhin gekennzeichnet durch eine Vorrichtung (48), die zur Kühlung des Abgasstroms vor dessen Kontaktierung mit dem Lösungsmittelsystem vorgesehen ist.

17. Vorrichtung nach einem der Ansprüche 11 bis 16, weiterhin gekennzeichnet durch eine Anordnung (50) zum Kühlen der CO₂-ärmeren Abgase durch Kontakt mit Wasser, was die Herauslösung von Ammoniak bewirkt, und wobei die Anordnung zur Rückführung (23a) des gelösten Ammoniak in den Lösungsmittelstrom dient.

18. Vorrichtung nach Anspruch 17, bei der die Absorberstufe und die Kühlanordnung durch einen gemeinsamen Behälter (15) bereitgestellt werden.

## Revendications

1. Procédé de récupération de dioxyde de carbone à partir d'un flux de gaz de carneau, comprenant :
la mise en contact du flux à une pression de gaz supérieure à la pression atmosphérique avec un système de solvant aqueux, contenant des ions ammonium, carbonate et bicarbonate, à une température supérieure à 10 °C pour effectuer une absorption de CO₂ à partir du flux,
la séparation du solvant contenant le CO₂ absorbé en tant que carbonate, bicarbonate et CO_{2(aq)} du flux de gaz de carneau plus pauvres en CO₂ pour former un flux de solvant riche en CO₂ et/ou bicarbonate ; et
la détente des gaz de carneau plus pauvres en CO₂ à une pression plus faible, en refroidissant ainsi les gaz ;
**caractérisé par** le recyclage dans le système de solvant aqueux de l'ammoniac condensé à partir dudit gaz de carneau suite à ladite détente.

2. Procédé selon la revendication 1, dans lequel ladite pression plus faible est sensiblement la pression atmosphérique.

3. Procédé selon la revendication 1 ou 2, dans lequel ladite pression de gaz est dans la plage de 500 à 3 000 kPa, lorsqu'il est mis en contact avec le système de solvant.

4. Procédé selon la revendication 1, 2 ou 3, dans lequel ladite pression de gaz est dans la plage de 500 à 1 500 kPa, lorsqu'il est mis en contact avec le système de solvant.

5. Procédé selon l'une quelconque des revendications 1 à 4, incluant en outre la compression dudit flux de gaz de carneau avant ladite étape de mise en contact, à ladite pression de gaz supérieure à la pression atmosphérique.

6. Procédé selon l'une quelconque des revendications 1 à 4, incluant en outre le refroidissement desdits gaz de carneau plus pauvres en CO₂ par contact avec de l'eau qui dissout l'ammoniac de ceux-ci, et le recyclage dudit ammoniac dissous de nouveau dans ledit système de solvant.

7. Procédé selon la revendication 6, dans lequel les étapes de mise en contact du flux de gaz de carneau avec le système de solvant aqueux et de refroidissement des gaz de carneau plus pauvres en CO₂ par contact avec l'eau sont réalisées dans une cuve commune.

8. Procédé selon l'une quelconque des revendications 1 à 7, dans lequel ladite étape de mise en contact du flux de gaz de carneau avec le système de solvant aqueux s'effectue à une température supérieure à 20 °C.

9. Procédé selon l'une quelconque des revendications 1 à 7, dans lequel ladite étape de mise en contact du flux de gaz de carneau avec le système de solvant aqueux s'effectue à une température dans la plage de 20 à 50 °C.

10. Procédé selon l'une quelconque des revendications 1 à 9, incluant en outre la désorption de CO₂ à partir du flux de solvant riche en CO₂ et/ou bicarbonate par application de chaleur au flux de solvant pour désorber le CO₂, et former ainsi un flux de solvant pauvre en CO₂, et le recyclage du flux de solvant pauvre en CO₂ dans ledit système de solvant.

11. Procédé selon la revendication 10, dans lequel ledit CO₂ désorbé à partir du flux de solvant riche en CO₂ et/ou bicarbonate est comprimé, refroidi et liquéfié en vue d'être stocké.

12. Procédé selon l'une quelconque des revendications 1 à 11, incluant le refroidissement du flux de gaz de carneau avant qu'il soit mis en contact avec le flux de solvant.

13. Appareil de récupération de dioxyde de carbone à partir d'un flux de gaz de carneau, comprenant :
un étage absorbeur (14) pour mettre en contact le flux avec un système de solvant aqueux à une température supérieure à 10 °C, ladite solution de solvant aqueux contenant de l'ammoniac dissous pour effectuer l'absorption de CO₂ à partir dudit flux, l'étage absorbeur pour séparer le solvant contenant le CO₂ absorbé du flux de gaz de carneau plus pauvres en CO₂ pour former un flux de solvant riche en CO₂ et/ou bicarbonate ; et
un détendeur de gaz (45) installé pour recevoir lesdits gaz plus pauvres en CO₂ et détendre les gaz à une pression plus faible ;
**caractérisé en ce que** ledit détendeur de gaz est configuré et raccordé pour recycler dans le système de solvant aqueux l'ammoniac condensé à partir dudit gaz de carneau suite à ladite détente.

14. Appareil selon la revendication 13, incluant en outre un compresseur (8) agencé pour comprimer ledit flux de gaz de carneau à une pression supérieure à la pression atmosphérique, dans lequel ledit compresseur est raccordé (16) audit étage absorbeur pour lui délivrer les gaz pressurisés pour ladite mise en contact avec le système de solvant aqueux, moyennant quoi, en fonctionnement, ladite mise en contact s'effectue à une pression supérieure à la pression atmosphérique.

15. Appareil selon la revendication 13 ou 14, incluant en outre un étage épuiseur (30) raccordé pour recevoir (25) le flux de solvant riche en CO₂ et/ou bicarbonate à partir de l'étage absorbeur et pour appliquer de la chaleur pour désorber le CO₂ à partir du flux et former ainsi un flux de solvant pauvre en CO₂, dans lequel l'étage épuiseur (30) est raccordé (32) pour recycler le flux de solvant pauvre en CO₂ dans ledit système de solvant.

16. Appareil selon l'une quelconque des revendications 11 à 15, incluant en outre un dispositif (48) agencé pour refroidir le flux de gaz de carneau avant qu'il soit mis en contact avec le système de solvant.

17. Appareil selon l'une quelconque des revendications 11 à 16, comprenant en outre un agencement (50) de refroidissement desdits gaz de carneau plus pauvres en CO₂ par contact avec l'eau qui en dissout l'ammoniac, et dans lequel ledit agencement est destiné à recycler (23a) l'ammoniac dissous de nouveau dans ledit système de solvant.

18. Appareil selon la revendication 17, dans lequel ledit étage absorbeur et ledit agencement de refroidissement sont fournis par une cuve commune (15).
